# EUROPÄISCHE PATENTSCHRIFT

(11) **EP 1 732 001 B1**
(45) Veröffentlichungstag und Bekanntmachung des Hinweises auf die Patenterteilung: **10.07.2019**
(21) Anmeldenummer: 06010479.1
(22) Anmeldetag: 22.05.2006
(51) Int. Cl.: G06F 9/445

(54) **Validierung eines zur nativen Ausführung durch einen Prozessor vorgesehenen Programms auf einem Datenträger**
Validation of a program on a data carrier intended for native execution by a processor
Validation d'un program dans un support de données prévu destiné à l'exécution native

(30) Priorität: 08.06.2005 DE 102005026384
(43) Veröffentlichungstag der Anmeldung: 13.12.2006
(73) Patentinhaber: Giesecke+Devrient Mobile Security GmbH, 81677 München (DE)
(72) Erfinder: Spitz, Stephan, 81245 München (DE); Englbrecht, Erich, 85646 Anzing (DE)

(56) Entgegenhaltungen:
- WO-A-98/43212
- ZHICHEN XU ET AL: "Safety checking of machine code" SIGPLAN NOTICES ACM USA, Bd. 35, Nr. 5, Mai 2000 (2000-05), Seiten 70-82, XP002408415 ISSN: 0362-1340
- DEVILLE D., GALLAND A., GRIMAUD G., JEAN S.: "Assessing the future of smart card operating systems"[Online] 2003, Seiten 1-13, XP002408416 Sophia Antipolis, France Gefunden im Internet: URL:http://www.gemplus.com/smart/rd/public ations/pdf/DGGJ03sc.pdf> [gefunden am 2006-11-14]
- BERNARDESCHI C ET AL: "An abstract semantics tool for secure information flow of stack-based assembly programs" MICROPROCESSORS AND MICROSYSTEMS, IPC BUSINESS PRESS LTD. LONDON, GB, Bd. 26, Nr. 8, 10. November 2002 (2002-11-10), Seiten 391-398, XP004381408 ISSN: 0141-9331

## Beschreibung

Die Erfindung betrifft allgemein das technische Gebiet der gesicherten Programmausführung durch einen tragbaren Datenträger und insbesondere das Gebiet der Validierung eines zur nativen Ausführung durch einen Prozessor des Datenträgers vorgesehenen Programms. Der tragbare Datenträger kann in unterschiedlichen Bauformen beispielsweise als Chipkarte oder als Chipmodul (*Token*) oder als vergleichbares ressourcenbeschränktes System ausgestaltet sein.

Auf dem Gebiet der tragbaren Datenträger ist die von der Firma Sun Microsystems, Inc., Palo Alto, Kalifornien, USA entwickelte *Java-Card*™-Technologie gut bekannt und beispielsweise in Kapitel 5.10.2 des Buches "Handbuch der Chipkarten" von W. Rankl und W. Effing, Hanser Verlag, 3. Auflage, 1999, Seiten 261 - 281, zusammenfassend beschrieben. Kompilierte Programme liegen hier als sogenannte *Class*-Dateien zur Ausführung durch eine virtuelle *Java-Card*-Maschine (*Java Card Virtual Machine* - JCVM) vor. Die JCVM weist ein als *Bytecode Verifier* bezeichnetes Verifikationsmodul auf, das außerhalb des Datenträgers eine Reihe von Analyseschritten ausführt. Wenn sich bei der Analyse keine Beanstandungen ergeben, wird das Programm in einem als CAP-Format bezeichneten Ladeformat in den Datenträger geladen und dort von einem *Bytecode Interpreter* ausgeführt.

Weil das Programm auf dem Datenträger interpretiert - also nicht nativ von einem Prozessor des Datenträgers ausgeführt - wird, ist die effektive Ausführungsgeschwindigkeit jedoch relativ gering. Dies fällt um so mehr ins Gewicht, als tragbare Datenträger aus Platz- und Kostengründen in der Regel keine leistungsfähigen Prozessoren enthalten. Es besteht daher ein Bedürfnis, die Ausführungsgeschwindigkeit von Programmen auf dem Datenträger zu steigern und dennoch eine hohe Sicherheit gegen absichtlich manipulierten oder aus sonstigen Gründen fehlerhaften Programmcode zu erzielen.

US 2004/0230949 A1 offenbart ein Verfahren zur Verifikation eines nativen Programms, das von einem interpretierten Java-Programm aufgerufen wird. Um eine Verfälschung des nativen Programms erkennen zu können, sind dem nativen Programm gespeicherte Verifikationsinformationen in Form eines Hash-Wertes oder eine Prüfsumme oder einer Signatur zugeordnet. Vor der Ausführung des nativen Programms werden diese Verifikationsinformationen neu berechnet und mit den gespeicherten Verifikationsinformationen verglichen.

Aus der genannten Schrift geht jedoch nicht hervor, nach welchen Kriterien entschieden wird, ob das native Programm durch die Verifikationsinformationen als vertrauenswürdig gekennzeichnet werden soll. Es besteht daher ein Bedürfnis nach einem Validierungsverfahren, das über eine bloße Erkennung von Programmverfälschungen hinausgeht.

EP 1104 564 B1 offenbart ein Verfahren zum Ausführen von nativem Code in einer Java-Umgebung. Der native Code wird hierbei in eine gesicherte Form übersetzt, die Prüfbefehle für unerlaubte Speicherzugriffe enthält und die eine kooperative nebenläufige Programmausführung mit anderen Programmsträngen (*threads*) erlaubt.

Wegen der zusätzlichen Programmbefehle ist die gesicherte Form jedoch weniger effizient als der ursprüngliche native Code. Es besteht daher ein Bedürfnis, die Effizienz des ursprünglichen nativen Codes bei gleichzeitig hoher Sicherheit beizubehalten.

Gemäß dem Artikel "Safety Checking of Machine Code" von Xu, Miller und Reps kann jedem einzelnen Maschinencode eine Statusangabe, eine Sicherheitspolitik und eine Aufrufinformation zugewiesen werden, um eine Verifizierung des so ergänzten nativen Codes zu ermöglichen.

Die Erfindung hat die Aufgabe, die Probleme des Standes der Technik zumindest zum Teil zu vermeiden und eine Technik zur Validierung eines Programms bereitzustellen, die eine sichere und effiziente Ausführung von nativem Programmcode durch einen Prozessor eines tragbaren Datenträgers ermöglicht.

Erfindungsgemäß wird diese Aufgabe ganz oder zum Teil gelöst durch ein Verfahren mit den Merkmalen von Anspruch 1, einen tragbaren Datenträger gemäß Anspruch 12, einen Verarbeitungsrechner gemäß Anspruch 13 und ein Computerprogrammprodukt gemäß Anspruch 14. Die abhängigen Ansprüche definieren optionale Merkmale einiger Ausführungsformen der Erfindung.

Es ist ein Aspekt der Erfindung, eine Analyse des Programms hinsichtlich seiner Programmstruktur und/oder seiner Programmbefehle und/oder seines voraussichtlichen Ablaufverhaltens durchzuführen und das Programm nur dann zur Ausführung durch den Prozessor des Datenträgers freizugeben, wenn das Programm vorgegebene Kriterien erfüllt. Durch die erfindungsgemäße Technik kann plattformabhängiger (nativer) Programmcode effizient ausgeführt werden und gleichzeitig ein hoher Grad an Sicherheit gegenüber böswilligen Angriffen oder Programmierfehlern erzielt werden.

In bevorzugten Ausgestaltungen enthält das Ladeformat neben dem ausführbaren Binärcode Zusatzinformationen, die sowohl zur Validierung des Programms als auch zum Laden des Programms verwendet werden. Solche Zusatzinformationen können beispielsweise die Architektur des Datenträgers (Ausführungsplattform) - insbesondere die Art des im Datenträger vorhandenen Prozessors und die Größe und Lage der im Datenträger verfügbaren Speicherbereiche - beschreiben.

In manchen Ausgestaltungen umfasst die Validierung eine Formatprüfung und/oder eine Prüfung der Programmstruktur auf ihre logische Konsistenz und/oder eine Einzelprüfung der in dem Programm enthaltenen Programmbefehle und/oder eine Analyse dieser Programmbefehle in ihrem Zusammenwirken. Vorzugsweise werden zumindest zwei oder zumindest drei der gerade genannten Analysestufen ausgeführt, z.B. zumindest die zweite und dritte Stufe oder zumindest die zweite und vierte Stufe oder zumindest die dritte und vierte Stufe.

Die erfindungsgemäße Validierung kann in unterschiedlichen Ausgestaltungen innerhalb des Datenträgers oder von einem externen Verarbeitungsrechner ausgeführt werden.

Der tragbare Datenträger, der Verarbeitungsrechner und das Computerprogrammprodukt weisen in bevorzugten Weiterbildungen Merkmale auf, die den oben erwähnten und/oder den in den abhängigen Verfahrensansprüchen genannten Merkmalen entsprechen.

Das erfindungsgemäße Computerprogrammprodukt kann ein körperliches Medium mit gespeicherten Programmbefehlen sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprodukt ein Analysemodul für einen Verarbeitungsrechner oder ein Analyse- und Lademodul für einen tragbaren Datenträger enthalten.

Weitere Merkmale, Aufgaben und Vorteile der Erfindung ergeben sich aus der folgenden Beschreibung mehrerer Ausführungsbeispiele und Ausführungsalternativen. Es wird auf die schematischen Zeichnungen verwiesen, in denen zeigen:
Fig. 1 ein Blockdiagramm eines Datenträgers mit einem internen Analyse- und Lademodul nach einem ersten Ausführungsbeispiel der Erfindung,
Fig. 2 ein Blockdiagramm eines an einen Verarbeitungsrechner angeschlossenen Datenträgers mit einem vom Verarbeitungsrechner ausgeführten Analysemodul und einem vom Datenträger ausgeführten Lademodul nach einem zweiten Ausführungsbeispiel der Erfindung, und
Fig. 3 ein schematisches Ablaufdiagramm eines Analysevorgangs, wie er von dem Datenträger in Fig. 1 bzw. dem Verarbeitungsrechner in Fig. 2 ausgeführt wird.

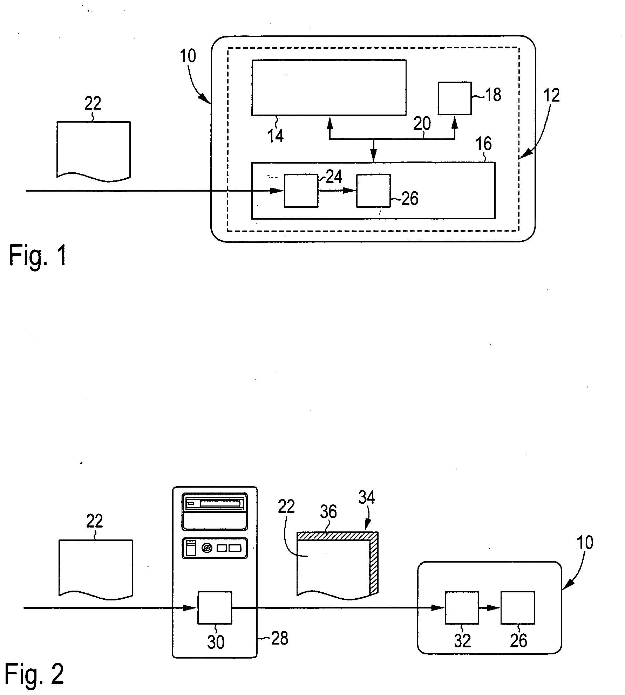

In Fig. 1 ist ein tragbarer Datenträger 10 mit einem Mikrocontroller 12 gezeigt. In an sich bekannter Weise sind in dem Mikrocontroller 12 auf einem einzigen Halbleiterchip ein Prozessor 14, ein Speicher 16 und eine Schnittstellenschaltung 18 integriert, die miteinander über einen Bus 20 verbunden sind. Der Speicher 16 ist in mehrere in unterschiedlichen Technologien ausgestaltete Speicherfelder - z.B. RAM, ROM, EEPROM und Flash-Speicher - gegliedert.

Ein Programm 22, das letztendlich zur nativen Ausführung durch den Prozessor 14 des Datenträgers 10 vorgesehen ist, liegt außerhalb des Datenträgers 10 in einem Ladeformat vor. In manchen Ausführungsformen ist das Ladeformat ein an sich bekannten Format, z.B. das bei UNIX-Systemen bekannte "a.out"-Format oder das ELF-Format, das in dem vom TIS-Komitee herausgegebenen Dokument *"*Tool Interface Standard (TIS) Executable and Linking Format (ELF) Specification", Version 1.2, Mai 1995, beschrieben ist. In anderen Ausführungsformen wird als Ladeformat ein eigens spezifiziertes Binärformat verwendet, das insbesondere im Hinblick auf Sicherheitsanforderungen optimiert sein kann.

In dem Ausführungsbeispiel gemäß Fig. 1 wird das Programm 22 im Ladeformat von einem im Speicher 16 befindlichen Analyse- und Lademodul 24 im Hinblick auf eine Reihe von Kriterien analysiert. Falls die Analyse erfolgreich war, also alle Kriterien erfüllt sind, wird das Programm 22 als nativer Programmcode 26 in den Speicher 16 eingeschrieben und zur Ausführung durch den Prozessor 14 freigegeben. Falls eines der vorgegebenen Kriterien nicht erfüllt ist, wird der Analyse- und Ladevorgang abgebrochen.

Fig. 2 veranschaulicht eine Ausführungsalternative, bei der die Analyse des Programms 22 von einem externen Verarbeitungsrechner 28 ausgeführt wird. Das Analyse- und Lademodul 24 von Fig. 1 ist somit bei dem Ausführungsbeispiel gemäß Fig. 2 aufgespalten in ein auf dem Verarbeitungsrechner 28 ablaufendes Analysemodul 30 und ein Lademodul 32, das im Speicher 16 des Datenträgers 10 enthalten ist und von dem Prozessor 14 des Datenträgers 10 ausgeführt wird. In unterschiedlichen Ausgestaltungen kann der Verarbeitungsrechner 28 ein lokales Endgerät - z.B. ein kontaktlos oder kontaktgebunden mit dem Datenträger 10 gekoppeltes Terminal - oder ein räumlich vom Datenträger 10 entferntes Gerät - z.B. ein bei einer Zertifizierungsstelle befindlicher Rechner - sein.

Bei einem erfolgreichen Abschluss der Analyse wird das Programm 22 in gesicherter Weise in den Datenträger 10 geladen, als nativer Programmcode 26 in den Speicher 16 eingeschrieben und zur Ausführung durch den Prozessor 14 freigegeben. Hierzu erzeugt das Analysemodul 30 im vorliegenden Ausführungsbeispiel ein gesichertes Programm 34, das die Informationen des Programms 22 im Ladeformat und eine kryptographisch sichere Signatur 36 aufweist. Das Lademodul 32 überprüft diese Signatur 36 und schreibt den nativen Programmcode 26 nur dann in den Speicher 16 ein, wenn eine Verfälschung des gesicherten Programms 34 ausgeschlossen werden kann.

Das gesicherte Programm 34 kann in manchen Ausgestaltungen zwischengespeichert werden, so dass der Analysevorgang und der Ladevorgang zeitlich voneinander getrennt ablaufen. Diese Zwischenspeicherung kann z.B. in dem Verarbeitungsrechner 28 oder in einem anderen Rechner oder Rechnernetzwerk oder auf einem Datenträger - z.B. einer CD-ROM - erfolgen. In anderen Ausführungsformen wird das gesicherte Programm 34 unmittelbar nach der Analyse zum Datenträger 10 übertragen. Dies kann auch über einen gesicherten Datenübertragungskanal zwischen dem Verarbeitungsrechner 28 und dem Datenträger 10 erfolgen; eine zusätzliche Programmsignatur 36 ist dann nicht unbedingt erforderlich.

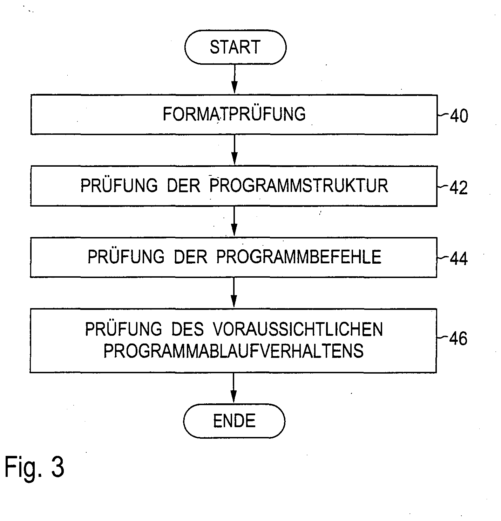

Fig. 3 veranschaulicht beispielhaft den Ablauf des Analyseverfahrens, wie es von dem Analyse- und Lademodul 24 (Fig. 1) bzw. dem Analysemodul 30 (Fig. 2) ausgeführt wird. Aus Gründen der klareren Darstellung sind die diversen Analyseschritte hier in vier Stufen 40, 42, 44, 46 untergliedert. In Ausführungsalternativen sind jedoch Abwandlungen möglich, bei denen einzelne Stufen weggelassen oder zusammengefasst werden oder manche Analyseschritte einer anderen Stufe zugeordnet werden.

In der ersten Stufe 40 findet eine Formatprüfung statt. Hierbei wird festgestellt, ob das vordefinierte Ladeformat des Programms 22 eingehalten wurde. Falls das Format einer Norm oder einer De-Facto-Norm entspricht - wie dies z.B. bei den Ladeformaten ELF und a.out der Fall ist -, können neben den durch die Norm vorgegebenen Kriterien auch zusätzliche Kriterien definiert und überprüft werden, um die Einhaltung von Einschränkungen, die aus Sicherheitsgründen getroffen wurden, zu überwachen. Wenn ein speziell zur Verwendung bei tragbaren Datenträgern entworfenes Ladeformat eingesetzt wird, so wird in der ersten Stufe 40 überprüft, ob das Programm 22 die gemäß diesem Ladeformat vorgegebenen Formatstrukturen aufweist.

In manchen Ausgestaltungen kann in der ersten Stufe 40 eine optional vorhandene Authentisierung des Programms 22 - z.B. in Form einer Codesignatur - ausgewertet werden. Der Analysevorgang in den Stufen 42 - 46 wird dann abhängig von Berechtigungen, die mit dieser Authentisierung verbunden sind, unterschiedlich durchgeführt. Um solche unterschiedliche Analyse- und Prüfungsschritte auszuführen, wird dabei die Authentisierung mit bestimmten Autorisierungen, die in die Prüfung eingehen, verbunden. Dies kann beispielsweise über eine Tabelle geschehen.

In der zweiten Prüfungsstufe 42 wird die Struktur des Programms 22 insbesondere auf logische Konsistenz und Sicherheit überprüft. So wird z.B. in dieser auch als "logische Prüfung" bezeichneten Stufe innerhalb des Binärformats des Programms 22 überprüft, ob Kriterien, die aus Sicherheitsgründen festgelegt wurden, eingehalten sind. Ein solches Kriterium kann beispielsweise die Trennung von Code- und Datensegmenten im Programm 22 sein. Allgemein werden in der zweiten Stufe 42 solche Überprüfungen vorgenommen, die noch keine Betrachtung der Programmbefehle im Programm 22 erfordern.

Als weiteres Beispiel für die in der zweiten Stufe 42 vorgenommene Analyse ist die Prüfung der Verlinkung mit anderen Bibliotheken oder Programmbestandteilen zu nennen. Beispielsweise kann überprüft werden, ob eine Zugriffsberechtigung auf alle referenzierten Felder und Funktionen existiert. Eine solche Zugriffsberechtigung kann in manchen Ausgestaltungen in Abhängigkeit von einer in der ersten Stufe 40 gegebenenfalls erfolgten Autorisierung bestimmt werden.

In der dritten Stufe 44 werden die einzelnen im Programm 22 enthaltenen Programmbefehle analysiert. So kann beispielsweise überprüft werden, ob bestimmte Befehle, die aufgrund von Sicherheitsbestimmungen ausgeschlossen sein sollen, tatsächlich nicht im Programmcode 22 enthalten sind. Auf diese Weise können kritische Befehlskombinationen - z.B. Zeigerarithmetik oder Typumwandlungen (*type casts*) -, die durch Programmierrichtlinien verboten sind, erkannt werden. Die Befehlsprüfung in der dritten Stufe 44 umfasst Kriterien, die die einzelnen im Programm 22 enthaltenen Befehle einschließlich der zugehörigen Argumente betreffen.

In vielen Ausgestaltungen werden in der dritten Stufe 44 Informationen zur Zielplattform oder dem Betriebssystem ausgewertet, um die Überprüfung möglichst umfassend zu gestalten. Insbesondere bei einem außerhalb des Datenträgers 10 stattfindenden Analysevorgang - wie beispielhaft in Fig. 2 gezeigt - können diese Informationen in dem Ladeformat des Programms 22 enthalten sein.

Als Beispiel für eine in der dritten Stufe 44 vorgenommene Befehlsüberprüfung können alle Programmbefehle, die auf den Speicher 16 zugreifen, dahingehend analysiert werden, ob sie nur zugelassene und/oder in der ersten Stufe 40 authorisierte Speicherbereiche addressieren. Hierzu kann beispielsweise eine Überprüfung aller Anweisungen mit Befehlscodes, die ladend oder schreibend auf den Speicher zugreifen, erfolgen. Wenn es sich bei dem Prozessor 14 um einen Prozessor mit einem MIPSCore handelt, wären dies Befehlscodes wie z.B. lw für load word, sw für store word. Allgemein müssen natürlich Einzelheiten der Speicherverwaltung des Prozessors 14 bekannt sein, um eine derartige Analyse vornehmen zu können.

In der vierten Stufe 46 wird das voraussichtliche Programmablaufverhalten des Programms 22 analysiert, wobei die Eigenschaften des Datenträgers 10 als Zielplattform und des Betriebssystems des Datenträgers 10 berücksichtigt werden. Zweck der Analyse ist wiederum eine Überprüfung der Sicherheit des Programms 22 bei der späteren Programmausführung. Insbesondere, wenn die Analyse wie z.B. in Fig. 2 von einem externen Verarbeitungsrechner 28 vorgenommen wird, kann das Ladeformat des Programms 22 Zusatzinformationen wie beispielsweise eine Kennung der Zielplattform - z.B. ob der Prozessor 14 als MIPS- oder ARM-Core ausgebildet ist - und/oder eine Kennung des Betriebssystems des Datenträgers 10 enthalten.

In manchen Ausgestaltungen der Erfindung werden in der vierten Stufe 46 Tests ausgeführt, wie sie unter der Bezeichnung "abstrakte Interpretation" an sich bekannt sind. Alternativ oder zusätzlich können in der vierten Stufe 46 auch das Programm 22 oder Codefragmente des Programms 22 in eine gesicherte Umgebung geladen und ausgeführt werden.

Die in der vierten Stufe 46 vorgenommene Analyse, die hier auch als "Laufzeitanalyse" bezeichnet wird, kann im allgemeinen keine vollständige Fehlerfreiheit des Programms 22 garantieren. Es wird jedoch versucht, bei der Analyse des Laufzeitverhaltens eine möglichst weitgehende Abdeckung des Programmcodes (*code coverage*) zu erhalten. Beispielsweise kann es ein Ziel der in der vierten Stufe 46 ausgeführten Analyse sein, Angriffe, die auf einem Stack-Überlauf beruhen, zu erkennen. Falls der Datenträger 10 ein Multitasking-Betriebssystem ausführt, kann in der vierten Stufe 46 auch versucht werden, Verklemmungen (*deadlocks*), die im Zusammenspiel mit anderem Programmcode auftreten können, frühzeitig zu erkennen.

Während die Analysestufen 40 - 46 bislang unter Hinweis auf Fig. 3 nur allgemein beschrieben wurden, wird im folgenden ein konkreteres Anwendungsszenario dargestellt. Das Programm 22 kann hier beispielsweise - dies ist aber nicht zwingend - im ELF-Ladeformat vorliegen. Abhängig davon, ob eine Programmbibliothek (*relocatable ELF file*), ein eigenständiges Programm (*executable ELF file*) oder eine dynamisch linkbare Bibliothek (*shared object ELF file*) vorliegt, kann die Analyse unterschiedlich ausgeführt werden.

In der Formatprüfung der ersten Stufe 40 werden der ELF-Kopfdatensatz (*ELF header*) und die darin enthaltenen Informationen - insbesondere die Kenninformationen (*magic bytes*) und Versionsinformationen (*version bytes*) - überprüft. Anschließend werden die einzelnen ELF-Abschnitte (*ELF sections*) analysiert; beispielsweise können die Längenangaben *sh_size* ausgewertet und überprüft werden. Allgemein kann das Programm 22 je nach dem verwendeten Ladeformat mehr oder weniger "globale" formatspezifische Angaben enthalten, deren Existenz und Richtigkeit in der ersten Stufe 40 analysiert und geprüft werden.

Bei der Prüfung der Programmstruktur in der zweiten Stufe 42 werden die einzelnen Abschnitte (*sections*) des Ladeformats - z.B. des ELF-Formats - auf ihre logische Konsistenz überprüft. In vielen Ladeformaten sind unterschiedliche Arten von Abschnitten vorgesehen, beispielsweise mindestens ein Abschnitt für den Programmcode, mindestens ein Abschnitt für Daten, mindestens ein Abschnitt, der Informationen über die im Programmcode benutzten Symbole enthält, und ein Abschnitt, der Relokationsinformationen (z.B. Adressen von Feld- oder Funktiönsreferenzen) enthält. Insgesamt können in der zweiten Stufe 42 z.B. einer oder mehrere der folgenden Analyseschritte durchgeführt werden:
- Überprüfung der logischen Anordnung und Ausrichtung (*order* und *alignment*) der im Programm 22 enthaltenen Daten.
- Überprüfung der im Programm 22 enthaltenen Referenzen, Symbolnamen, Labels, etc., auf syntaktische Richtigkeit.
- Überprüfung der Längenangaben aller Referenzen.
- Überprüfung der Auflösbarkeit aller Referenzen.
- Überprüfung der vorkommenden Verlinkungen *sh_link* zu anderem Programmcode hinsichtlich der Berechtigung zum Aufruf dieses Programmcodes.
- Auswertung der Informationen aus den *special sections* der ELF-Datei mit den Kontrollinformationen für das Betriebssystem.
- Überprüfung der Berechtigungen für alle Felder und Funktionen aus den Relokationsinformationen (*relocation entries*) des Programms 22.

In der dritten Stufe 44 werden sämtliche Programmbefehle der Codeabschnitte (*code sections*) des Programms 22 analysiert, wobei die Eigenschaften der Zielplattform - also insbesondere die Art des Prozessors 14 - berücksichtigt werden. Im Unterschied zu der folgenden Stufe 46 wird jedoch in der dritten Stufe 44 noch keine Analyse des voraussichtlichen Ablaufverhaltens vorgenommen, sondern es wird jeder Programmbefehl einzeln betrachtet. In der dritten Stufe 44 können z.B. einer oder mehrere der folgenden Analyseschritte vorgenommen werden:
- Überprüfung der Argumente jedes Programmbefehls:
   - Ist die korrekte Anzahl von Argumenten für den Programmbefehl vorhanden?
   - Existieren die im Programmbefehl angegebenen Register?
   - Stimmt der Typ jedes Arguments mit dem für den Programmbefehl geforderten Argumententyp überein?
- Überprüfung der Registerzugriffe:
   - Wird auf ein Register lesend zugegriffen, obwohl zu diesem Zeitpunkt kein definierter Datenwert im Register enthalten ist?
   - Ist der lesende Zugriff vom selben Typ wie der im Register enthaltene Wert?
- Überprüfung von Funktionsaufrufen:
   - Werden bei einem Funktionsaufruf die richtigen Datentypen auf den Stack abgelegt und von dort gelesen?
- Statische Stackanalyse

In der vierten Stufe 46 wird allgemein das Zusammenwirken der Befehle im Programm 22 analysiert. Die vorgenommenen Überprüfungen hängen stark von der Art der Zielplattform - insbesondere der Art des Prozessors 14 und des Betriebssystems - ab und weniger vom Ladeformat, da die Überprüfung des voraussichtlichen Programmablaufverhaltens erst mit Kenntnis der Ausführungsumgebung durchgeführt werden kann. Beispielhaft können in der vierten Stufe 46 einer oder mehrere der folgenden Analyseschritte vorgenommen werden:
- Überprüfung von Abhängigkeiten der verschiedenen Klassen, Objekte, Methoden, Funktionen, etc.:
   - Überprüfung, ob Aufrufe einer Funktion oder Struktur erlaubt sind.
   - Überprüfung der Existenz eines Aufrufs innerhalb einer Funktion.
- Speicherüberprüfung

Die bislang beschriebenen Verfahren und Analyseschritte sind grundsätzlich zur Verwendung mit diversen Ladeformaten vorgesehen und geeignet. Neben dem nativen oder plattformabhängigen Code soll das Ladeformat geeignete Zusatzinformationen enthalten, die die hier beschriebene Validierung unterstützen. Diese Zusatzinformationen können zumindest zum Teil auch zum Laden des Programms 22 in den Datenträger 10 und/oder zum Ausführen des Programms 22 durch den Prozessor 14 erforderlich sein. Beispielsweise können die Zusatzinformationen einige oder alle der folgenden Daten enthalten:
- Formatinformationen:
   - Kennzeichnung des verwendeten Ladeformats
   - Versionsinformation für das verwendete Ladeformat
- Informationen über die Zielplattform:
   - Lage, Größe und Art (RAM, EEPROM, Flash-Speicher, etc.) der verfügbaren Speicherbereiche
   - Art des Prozessors 14 und/oder Codierung der Programmbefehle
   - Codierung von Attributen
- Informationen über das Programm 22:
   - Start- und Endadresse jedes vom Programm 22 benötigten Speicherbereichs (gegebenenfalls aufgegliedert nach Codetypen, z.B. für ausführbaren Programmcode, Daten, etc.)
   - Einsprungadresse (erster auszuführender Programmbefehl)
- sonstige Informationen:
   - Ausrichtung (*alignment*) der Speicherbereiche (architekturabhängig können z.B. unterschiedliche Ausrichtungen bei unterschiedlichen Seitengrößen vorgesehen sein)
   - optionale Flags

Es versteht sich, dass die obige Beschreibung nur zur Veranschaulichung der Erfindung anhand von Ausführungsbeispielen dienen soll. Weitere Abwandlungen - insbesondere Kombinationen der oben beschriebenen Ausgestaltungen - ergeben sich für den Fachmann unmittelbar aus der obigen Beschreibung.

## Patentansprüche

1. Verfahren zur Validierung eines Programms (22), das in einem Ladeformat zur nativen Ausführung durch einen Prozessor (14) eines tragbaren Datenträgers (10) vorliegt, wobei das Programm (22) hinsichtlich seiner Programmstruktur und/oder seiner Programmbefehle und/oder seines voraussichtlichen Ablaufverhaltens analysiert wird, um festzustellen, ob das Programm (22) vorgegebene Kriterien erfüllt, und dass das Programm (22) zur nativen Ausführung durch den Prozessor (14) freigegeben wird, wenn es die vorgegebenen Kriterien erfüllt, und dass das Programm (22) andernfalls nicht zur nativen Ausführung durch den Prozessor (14) freigegeben wird, **dadurch gekennzeichnet, dass** eine vorhandene Authentisierung des Programms (22) in Form einer Codesignatur ausgewertet wird und der Schritt des Analysierens dann abhängig von Berechtigungen, die mit dieser Authentisierung verbunden sind, mit unterschiedlichen Analyseschritten durchgeführt wird,
wobei zur Durchführung der Analyseschritte die Authentisierung mit bestimmten Autorisierungen über eine Tabelle verbunden werden.

2. Verfahren nach Anspruch 1, **dadurch gekennzeichnet, dass** das Ladeformat Informationen enthält, die sowohl zur Validierung des Programms (22) als auch zum Laden des Programms (22) in den tragbaren Datenträger (10) verwendet werden.

3. Verfahren nach Anspruch 2, **dadurch gekennzeichnet, dass** das Ladeformat Informationen zur Architektur des Datenträgers (10) enthält.

4. Verfahren nach Anspruch 2 oder Anspruch 3, **dadurch gekennzeichnet, dass** das Ladeformat Informationen über den Prozessor (14) des Datenträgers (10) und/oder über verfügbare Bereiche eines Speichers (16) des Datenträgers (10) enthält.

5. Verfahren nach einem der Ansprüche 1 bis 4, **dadurch gekennzeichnet, dass** bei der Analyse des Programms (22) eine Formatprüfung (40) erfolgt.

6. Verfahren nach einem der Ansprüche 1 bis 5, **dadurch gekennzeichnet, dass** bei der Analyse des Programms (22) die Programmstruktur auf ihre logische Konsistenz überprüft wird.

7. Verfahren nach einem der Ansprüche 1 bis 6, **dadurch gekennzeichnet, dass** bei der Analyse des Programms (22) die in dem Programm (22) enthaltenen Programmbefehle einzeln überprüft werden.

8. Verfahren nach einem der Ansprüche 1 bis 7, **dadurch gekennzeichnet, dass** bei der Analyse des Programms (22) die in dem Programm (22) enthaltenen Programmbefehle in ihrem Zusammenwirken überprüft werden.

9. Verfahren nach einem der Ansprüche 1 bis 8, **dadurch gekennzeichnet, dass** das Programm (22) vor oder nach der Validierung als nativer Programmcode (26) in einen Speicher (16) des Datenträgers (10) eingeschrieben wird.

10. Verfahren nach einem der Ansprüche 1 bis 9, **dadurch gekennzeichnet, dass** das Programm (22) innerhalb des Datenträgers (10) durch den von einem Analyse- und Lademodul (24) gesteuerten Prozessor (14) validiert wird.

11. Verfahren nach einem der Ansprüche 1 bis 9, **dadurch gekennzeichnet, dass** das Programm (22) außerhalb des Datenträgers (10) durch einen von einem Analysemodul (30) gesteuerten Verarbeitungsrechner (28) validiert wird.

12. Tragbarer Datenträger (10), insbesondere Chipkarte oder Chipmodul, mit einem Prozessor (14) und mindestens einem Speicher (16), der dazu eingerichtet ist, ein Verfahren nach Anspruch 10 auszuführen.

13. Verarbeitungsrechner (28), der dazu eingerichtet ist, ein Verfahren nach Anspruch 11 auszuführen.

14. Computerprogrammprodukt mit einer Mehrzahl von Programmbefehlen, die eine programmierbare Vorrichtung veranlassen, ein Verfahren nach einem der Ansprüche 1 bis 11 auszuführen.

## Claims

1. A method for validating a program (22) which is present in a load format for native execution by a processor (14) of a portable data carrier (10), wherein the program (22) is analyzed with regard to its program structure and/or its program commands and/or its prospective run behavior to ascertain whether the program meets (22) pre-specified criteria, and that the program (22) is released for native execution by the processor (14) if it meets the pre-specified criteria, and that the program (22) is otherwise not released for native execution by the processor (14), **characterized in that** a present authentication of the program (22) in the form of a code signature is evaluated and the step of analyzing is then carried out depending on authorizations which are linked to this authentication, with different analysis steps, wherein for carrying out the analysis steps, the authentication is linked to certain authorizations via a table.

2. The method according to claim 1, **characterized in that** the load format contains information items which are employed for validating the program (22) as well as for loading the program (22) into the portable data carrier (10).

3. The method according to claim 2, **characterized in that** the load format contains information items on the architecture of the data carrier (10).

4. The method according to claim 2 or claim 3, **characterized in that** the load format contains information items about the processor (14) of the data carrier (10) and/or about available regions of a memory (16) of the data carrier (10).

5. The method according to any of claims 1 to 4, **characterized in that** upon the analysis of the program (22), a format check (40) is effected.

6. The method according to any of claims 1 to 5, **characterized in that** upon the analysis of the program (22), the program structure is checked as to its logical consistency.

7. The method according to any of claims 1 to 6, **characterized in that** upon the analysis of the program (22), the program commands contained in the program (22) are checked individually.

8. The method according to any of claims 1 to 7, **characterized in that** upon the analysis of the program (22), the program commands contained in the program (22) are checked as to their interaction.

9. The method according to any of claims 1 to 8, **characterized in that** before or after the validation, the program (22) is written as a native program code (26) to a memory (16) of the data carrier (10).

10. The method according to any of claims 1 to 9, **characterized in that** the program (22) is validated within the data carrier (10) by the processor (14) which is controlled by an analysis and loading module (24).

11. The method according to any of claims 1 to 9, **characterized in that** the program (22) is validated outside the data carrier (10) by a host computer (28) which is controlled by an analysis module (30).

12. A portable data carrier (10), in particular chip card or chip module, having a processor (14) and at least one memory (16), which is devised to execute a method according to claim 10.

13. A host computer (28) which is devised to execute a method according to claim 11.

14. A computer program product having a multiplicity of program commands which prompt a programmable apparatus to execute a method according to any of claims 1 to 11.

## Revendications

1. Procédé de validation d'un programme (22) se trouvant dans un format de chargement pour l'exécution native par un processeur (14) d'un support de données (10) portable, le programme (22) étant analysé quant à sa structure de programme et/ou quant à ses instructions de programme et/ou quant à son comportement probable de déroulement afin de constater si le programme (22) remplit des critères prédéterminés et que le programme (22) est déclenché pour l'exécution native par le processeur (14) quand il remplit des critères prédéterminés, et que le programme (22) n'est sinon pas déclenché pour l'exécution native par le processeur (14), **caractérisé en ce qu'**une authentification existante du programme (22) sous forme d'une signature de code est évaluée et que l'étape de l'analyse est alors réalisée par différentes étapes d'analyse en fonction de permissions liées à cette authentification,
cependant que, pour la réalisation des étapes d'analyse, l'authentification et certaines autorisations sont liées par l'intermédiaire d'une table.

2. Procédé selon la revendication 1, **caractérisé en ce que** le format de chargement contient des informations qui sont utilisées tant pour la validation du programme (22) que pour le chargement du programme (22) dans le support de données (10) portable.

3. Procédé selon la revendication 2, **caractérisé en ce que** le format de chargement contient des informations relatives à l'architecture du support de données (10).

4. Procédé selon la revendication 2 ou 3, **caractérisé en ce que** le format de chargement contient des informations sur le processeur (14) du support de données (10) et/ou sur des zones disponibles d'une mémoire (16) du support de données (10).

5. Procédé selon une des revendications de 1 à 4, **caractérisé en ce que**, lors de l'analyse du programme (22), un examen du format (40) a lieu.

6. Procédé selon une des revendications de 1 à 5, **caractérisé en ce que**, lors de l'analyse du programme (22), la structure du programme est vérifiée quant à sa cohérence logique.

7. Procédé selon une des revendications de 1 à 6, **caractérisé en ce que**, lors de l'analyse du programme (22), les instructions de programme contenues dans le programme (22) sont individuellement vérifiées.

8. Procédé selon une des revendications de 1 à 7, **caractérisé en ce que**, lors de l'analyse du programme (22), les instructions de programme contenues dans le programme (22) sont vérifiées quant à leur interaction.

9. Procédé selon une des revendications de 1 à 8, **caractérisé en ce que** le programme (22) est, avant ou après la validation, entré en tant que code natif de programme (26) dans une mémoire (16) du support de données (10).

10. Procédé selon une des revendications de 1 à 9, **caractérisé en ce que** le programme (22) est validé à l'intérieur du support de données (10) par le processeur (14) commandé par un module d'analyse et de chargement (24).

11. Procédé selon une des revendications de 1 à 9, **caractérisé en ce que** le programme (22) est validé à l'extérieur du support de données (10) par un ordinateur de traitement (28) commandé par un module d'analyse (30).

12. Support de données (10) portable, en particulier carte à puce ou module à puce, ayant un processeur (14) et au moins une mémoire (16), lequel est conçu pour exécuter un procédé selon la revendication 10.

13. Ordinateur de traitement (28) conçu pour exécuter un procédé selon la revendication 11.

14. Produit programme d'ordinateur comportant une pluralité d'instructions de programme qui amènent un dispositif programmable à exécuter un procédé selon une des revendications de 1 à 11.
